# EUROPÄISCHE PATENTSCHRIFT

(11) **EP 3 224 005 B1**
(45) Veröffentlichungstag und Bekanntmachung des Hinweises auf die Patenterteilung: **07.08.2019**
(21) Anmeldenummer: 15794856.3
(22) Anmeldetag: 03.11.2015
(51) Int. Cl.: B26D 1/01, B25J 5/00, B26D 7/01, B25J 15/00, B26D 1/12, B65G 47/90

(54) **HOCHLEISTUNGSSLICER MIT STOFFSCHLÜSSIGEM GREIFER**
HIGH OUTPUT SLICER WITH GRIPPER THROUGH MATERIAL CONNECTION
DÉCOUPEUSE POUR DES ALIMENTS A HAUTE PERFORMANCE AVEC DISPOSITIF DE PREHENSION PAR LIAISON DE MATERIEL

(30) Priorität: 25.11.2014 DE 102014224005
(43) Veröffentlichungstag der Anmeldung: 04.10.2017
(73) Patentinhaber: GEA Food Solutions Germany GmbH, 35216 Biedenkopf-Wallau (DE)
(72) Erfinder: KELLER, Markus, 6600 Pflach (AT)
(74) Vertreter: Kutzenberger Wolff & Partner
(86) Internationale Anmeldenummer: PCT/EP2015/075580
(87) Internationale Veröffentlichungsnummer: WO 2016/083084

(56) Entgegenhaltungen:
- EP-A1- 0 706 862
- WO-A1-2006/052140
- WO-A1-2012/041491
- US-A- 4 968 018

## Beschreibung

Die vorliegende Erfindung betrifft eine Hochleistungsschneidemaschine mit einem Greifer, der reversibel mit einem Ende eines Lebensmittelprodukts in Eingriff gebracht werden kann.

Derartige Greifer sind aus dem Stand der Technik, beispielsweise der EP 2 095 918, EP 2 095 920 und EP 2 095 919 bekannt und werden in Hochleistungsschneidemaschinen, in denen Lebensmittelprodukt, z. B. Fleisch, Wurst und/oder Käseriegel, in Lebensmittelscheiben geschnitten werden, eingesetzt. Dabei wird der Greifer vor oder während des Aufschneidens des Lebensmittelprodukts mit dessen Ende in Eingriff gebracht, um beispielsweise dieses Endstück beim Aufschneiden zu führen, zu stabilisieren und/oder um ein Endstück, das nicht weiter aufgeschnitten werden kann oder nicht aufgeschnitten werden soll, zu entsorgen. Die Greifer gemäß dem Stand der Technik haben jedoch den Nachteil, dass das Lebensmittelprodukt beim Ergreifen komprimiert wird und/oder dass ein vergleichsweise großes Reststück verbleibt, das nicht mehr zu verkaufbaren Lebensmittelportionen verwertet werden kann.

Es war deshalb die Aufgabe der vorliegenden Erfindung eine Hochleistungsschneidemaschine mit einem Greifer zur Verfügung zu stellen, der die Nachteile des Standes der Technik nicht aufweist.

Gelöst wird die Aufgabe mit einer Hochleistungsschneidemaschine gemäß Patentanspruch 1.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft einen Greifer für den Einsatz in Schneidemaschinen, insbesondere einer Hochleistungsschneidemaschine, bei der Lebensmittelprodukte in Lebensmittelscheiben aufgeschnitten werden. Dieser Greifer steht reversibel mit einem Lebensmittelprodukt, beispielsweise mit dessen einem Ende, in Eingriff und fixiert und/oder führt dieses insbesondere beim Aufschneiden der letzten Lebensmittelscheiben des Lebensmittelprodukts. Des Weiteren hält der Greifer das Reststück und führt es beispielsweise über einen Entsorgungsschacht, wo es von dem Greifer abgelöst und in einen Entsorgungsschacht fällt.

Vorzugsweise weist der Greifer eine oder mehrere Anlageflächen auf, an denen das Lebensmittelprodukt anliegt. Vorzugsweise ist die Form der jeweiligen Anlagefläche zumindest abschnittsweise der Form des Lebensmittelprodukts, an dem der Greifer anliegt, angepasst.

Vorzugsweise ist der Greifer, insbesondere der Teil, der stoffschlüssig mit dem Lebensmittelprodukt verbunden wird aus einem Material mit einer geringen Wärmekapazität vorgesehen, so dass dieser Teil schnell abgekühlt und schnell erwärmt werden kann. Beispielsweise ist dieser Teil aus Kunststoff und/oder Aluminium gefertigt.

Erfindungsgemäß ist dieser Greifer nun stoffschlüssig mit dem Lebensmittelprodukt insbesondere mit dessen hinterem Ende verbunden, wobei der Stoffschluss vorzugsweise reversibel vorgesehen ist. Der Stoffschluss zwischen dem Greifer und dem Lebensmittelprodukt erfolgt vorm und/oder beim Aufschneiden des Lebensmittelprodukts, wobei zumindest die Vollendung des Stoffschlusses bei bereits stattfindendem Aufschnitt bevorzugt ist, um Zeit zu sparen. Nach dem Aufschneiden wird der Stoffschluss wieder aufgehoben und/oder das verbleibende Reststück mechanisch, beispielsweise mit einem Ausstoßer von dem Greifer gelöst.

Vorzugsweise erfolgt der Stoffschluss durch einen Phasenwechsel eines Verbindungsstoffes, insbesondere Wasser, der/das zwischen dem Greifer und dem Lebensmittelprodukt vorgesehen ist. Dieser Verbindungsstoff wird im flüssigen und/oder pastösen Zustand zwischen dem Greifer, insbesondere dessen Anlagefläche(n) vorgesehen und härtet dort aus. Dadurch entsteht der Stoffschluss zwischen dem Greifer und dem Lebensmittelprodukt. Der Verbindungsstoff kann durch Spritzen, Kondensation/Abscheidung, Streichen und/oder Vernebeln zwischen den Greifer und das Lebensmittelprodukt gebracht werden. Beispielsweise wird flüssiges Wasser auf den Greifer und/oder das Lebensmittelprodukt und den Greifer aufgebracht und gefriert dort, so dass es zu einer stoffschlüssigen Verbindung zwischen dem Greifer und dem Lebensmittelprodukt kommt. Als Verbindungsmittel eignet sich aber auch ein Lebensmittelrechtlich zugelassener Kleber und/oder Gelatine.

Vorzugsweise ist an der Aufschneidevorrichtung, insbesondere dem Greifer ein Mittel vorgesehen, um den Verbindungsstoff zwischen dem Greifer und dem Lebensmittelprodukt vorzusehen.

Das Lebensmittelprodukt, beispielsweise Wurst, Käse oder Schinken kann beim Aufschneiden gefroren sein oder eine Temperatur > 0°C aufweisen.

Gemäß einer bevorzugten Ausführungsform ist der Greifer und/oder das Lebensmittelprodukt kühlbar vorgesehen. Diese Kühlung kann beispielsweise direkt oder indirekt mit dem Greifer/Lebensmittelprodukt verbunden sein. Die Energieübertragung zwischen der Kältequelle und dem Greifer/Produkt kann durch Strahlung, Leitung und/oder Konvektion erfolgen. Die Kühlung bewirkt den Phasenwechsel des Verbindungsstoffs, hier von gasförmig und/oder flüssig nach fest. Dadurch verbindet sich der Greifer stoffschlüssig mit dem aufzuschneidenden Lebensmittelprodukt.

Vorzugsweise erfolgt die Kühlung durch ein flüssiges Gas, insbesondere flüssigen Stickstoff.

Es ist aber auch möglich, dass insbesondere das Lebensmittelprodukt und/oder gegebenenfalls auch der Greifer so kalt ist/sind, das bei einer Berührung des Verbindungsstoffs mit mindestens einem der beiden zu verbindenden Teile dieser härtet und die stoffschlüssige Verbindung zwischen dem Greifer und dem Lebensmittelprodukt bewirkt.

Gemäß einer bevorzugten Ausführungsform ist der Greifer und/oder das Lebensmittelprodukt erwärmbar vorgesehen. Diese Erwärmung kann beispielsweise direkt oder indirekt mit dem Greifer/Lebensmittelprodukt verbunden sein. Die Wärmeübertragung zwischen der Wärmequelle und dem Greifer/Produkt kann durch Strahlung, Leitung und/oder Konvektion erfolgen. Die Erwärmung bewirkt den Phasenwechsel des Verbindungsstoffs hier von fest nach flüssig und/oder gasförmig. Dadurch löst sich das Reststück von dem Greifer. Vorzugsweise ist die Heizung eine elektrische Heizung, insbesondere mit einer sehr geringen Wärmekapazität und einer sehr kurzen Ansprechzeit, insbesondere im Millisekundenbereich. Beispielsweise kann das Heizen durch IR- und/oder NIR-Strahlung, insbesondere mit einem Carbonstrahler erfolgen.

Vorzugsweise weist der Greifer zusätzlich ein Form- und/oder Kraftschlussmittel, vorzugsweise eine Klaue, eine Schneide und/oder einen Dorn auf. Dieses Mittel kann auch zur Vergrößerung der Berührungsfläche zwischen dem Greifer und dem Lebensmittelprodukt dienen und dadurch den Stoffschluss verbessern.

Der erfindungsgemäße Greifer hat den Vorteil, dass nur ein sehr geringes Reststück nicht aufgeschnitten werden kann, wodurch sich die Anzahl der abgeschnittenen Lebensmittelscheiben pro Lebensmittelprodukt erhöht. Beim Stoffschluss zwischen dem Greifer und dem Lebensmittelprodukt werden keine oder nur sehr geringe Kräfte auf das Lebensmittelprodukt ausgeübt, so dass sich dessen Form nicht ändert, was insbesondere bei gescannten Produkten, die gewichtsgenau aufgeschnitten werden sollen, sehr vorteilhaft ist.

Ein weiterer Gegenstand der vorliegenden Erfindung ist eine Aufschneidevorrichtung aufweisend mindestens einen erfindungsgemäßen Greifer.

Die zu diesem Gegenstand der vorliegenden Erfindung gemachten Ausführungen gelten für die anderen Gegenstände der Erfindung gleichermaßen und umgekehrt.

Vorzugsweise weist die Aufschneidevorrichtung mehrere Spuren auf, d.h. es werden zumindest zeitweise mehrere Lebensmittelprodukte gleichzeitig nebeneinander aufgeschnitten. Jede Spur weist dann vorzugsweise einen Greifer auf, der jeweils ein Lebensmittelprodukt ergreift, insbesondere dessen Ende. Die Greifer sind vorzugsweise individuell antreibbar, so dass die Lebensmittelprodukte in den einzelnen Spuren mit unterschiedlichen Geschwindigkeiten aufgeschnitten werden können.

Ein weiterer Gegenstand der vorliegenden Erfindung ist ein Verfahren zum Aufschneiden eines Lebensmittelprodukts, bei dem das Ende des Lebensmittelprodukts vor und/oder während des Aufschneidens mit einem Greifer in Kontakt gebracht wird und bei dem zwischen dem Ende des Lebensmittelprodukts und dem Greifer ein Stoffschluss ausgebildet wird.

Die zu diesem Gegenstand der vorliegenden Erfindung gemachten Ausführungen gelten für die anderen Gegenstände der Erfindung gleichermaßen und umgekehrt.

Erfindungsgemäß wird vor und/oder während des Aufschneidens des Lebensmittelprodukts in Lebensmittelscheiben der Greifer stoffschlüssig mit dem Lebensmittelprodukt, insbesondere dessen Ende, verbunden. Dafür wird der Greifer beispielsweise in Richtung des hinteren Endes des Lebensmittelprodukts bewegt. Vor und/oder während dieser Bewegung und/oder während der Greifer bereits an dem Lebensmittelprodukt anliegt, wird ein Verbindungsmittel zwischen dem Lebensmittelprodukt und dem Greifer vorgesehen, das dann dort erstarrt und den Stoffschluss bewirkt. Sobald der Aufschnitt des Lebensmittelprodukts beendet ist, wird das von dem Lebensmittelprodukt verbleibende Reststück wieder von dem Greifer abgelöst. Dies kann durch eine Erwärmung des Greifers und/oder des Reststücks erfolgen und/oder indem das Reststück mit eine mechanischen Kraft, die die Kraft des Stoffschlusses übersteigt, von dem Greifer getrennt wird. Danach wird der Greifer wieder in seine Ausgangslage gebracht und dabei und/oder danach wieder auf den Stoffschluss mit dem nächsten Lebensmittelprodukt vorbereitet, beispielsweise indem der insgesamt Greifer und/oder dessen Anlageflächen insbesondere wieder gekühlt wird/werden.

Vorzugsweise wird das Ende des Lebensmittelprodukts an dem Greifer festgefroren. Das dafür benötigte Wasser und/oder die dafür benötigte Feuchtigkeit kann beispielsweise durch Kondensation/Abscheidung, Besprühen, Vernebeln, Aufstreichen, Eintauchen auf den Greifer, insbesondere dessen Anlageflächen und/oder auf das Lebensmittelprodukt aufgetragen werden. Bei gefrorenen Lebensmittelprodukten kann das Ende aber auch kurz angetaut werden, so dass Feuchtigkeit, die sich auf dessen Oberfläche befindet taut und dann beim Kontakt mit dem Greifer wieder erstarrt und dadurch den Stoffschluss zwischen Greifer und Lebensmittelprodukt bewirkt.

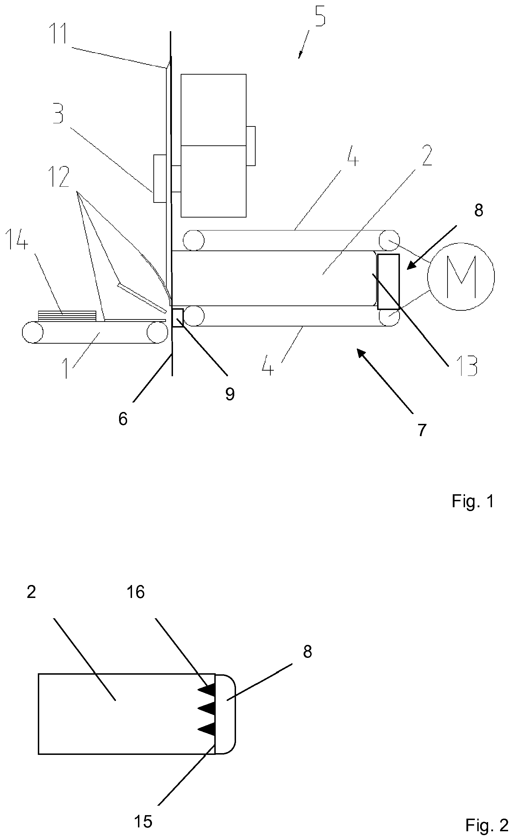

Im Folgenden wird die Erfindung anhand der Figuren 1 und 2 erläutert. Diese Erläuterungen sind lediglich beispielhaft und schränken den allgemeinen Erfindungsgedanken nicht ein. Die Ausführungen gelten für alle Gegenstände der vorliegenden Erfindung gleichermaßen.
- **Figur 1**: zeigt die erfindungsgemäße Aufschneidevorrichtung.
- **Figur 2**: zeigt den erfindungsgemäßen Greifer und das erfindungsgemäße Verfahren

**Figur 1** zeigt eine Aufschneidevorrichtung 5. Die Aufschneidevorrichtung 5 weist ein Schneidmesser 11 auf, das ein Lebensmittelprodukt 2 in Lebensmittelscheiben 12 schneidet. Dazu wird jedes Lebensmittelprodukt 2 mit einem Fördermittel 4, hier zwei Förderbändern 4, kontinuierlich oder intermittierend in Richtung der Schneidebene 6 des Messers 11 transportiert. Das untere Förderband 4 ist gleichzeitig eine Produktauflage. Das Schneidmesser 11 ist an einer sich drehenden Messeraufnahme 3 befestigt und wirkt mit einer Schneidkante 9 schneidend zusammen, die beispielsweise am vorderen Ende einer Produktauflage 4 vorgesehen ist und die gemeinsam die Schneidebene 6 definieren. Zwischen dem Messer 11 und der Schneidkante 9 ist ein sogenannter Schneidspalt vorhanden, der möglichst klein sein sollte, jedoch so groß sein muss, dass das Messer die Schneidkante nicht berührt. Dieser Spalt muss regelmäßig eingestellt werden. Dies kann durch eine Bewegung des Messers und/oder der Schneidkante erfolgen. Außerdem muss die Schneidkante parallel zu dem Messer ausgerichtet sein. Nach dem Abschneiden fallen die Lebensmittelscheiben in der Regel auf einen Ablagetisch 1, der mit Transportmitteln, beispielsweise einem Transportband oder Transportriemen, versehen ist, auf dem sie zu jeweils einer Portion 14, hier einem Stapel, konfiguriert werden. Die fertiggestellten Portionen 14 werden sodann aus dem Schneidmesserbereich abtransportiert und danach verpackt. Die Scheibenstärke ergibt sich aus der Vorschubstrecke des Lebensmittelproduktes zwischen zwei Schnitten. Bei konstanter Messerdrehgeschwindigkeit erfolgt die Regelung der Scheibenstärke über die Vorschubgeschwindigkeit des Lebensmittelproduktes. Die Aufschneidevorrichtung weist pro Vorschubtrasse 7 einen Greifer 8 auf, der das rückwärtige Ende 13 des Lebensmittelproduktes 2 vor und/oder während des Aufschneidens ergreift und dieses während des Aufschneidens, insbesondere gegen Ende des Aufschneidens, stabilisiert und das Endstück, das nicht aufgeschnitten werden kann, entsorgt. Jeder Greifer ist vorzugsweise an einem Greiferwagen (nicht dargestellt) vorgesehen, der die Greifer, insbesondere parallel zur Vorschubrichtung des Lebensmittelprodukts, vor- und zurückbewegt. Jeder Greifer ist zumindest zeitweise vorzugsweise individuell antreibbar.

Vorzugsweise ist die Aufschneidevorrichtung mehrspurig vorgesehen, d. h. dass mehrere Lebensmittelprodukte 2 von einem Messer, insbesondere zumindest zeitweise gleichzeitig oder zumindest zeitweise sequentiell, aufgeschnitten werden. Dafür weist die Vorrichtung für jedes Lebensmittelprodukt eine eigene Spur 7 auf, entlang derer es in Richtung des Messers 11 transportiert wird.

Erfindungsgemäß wird der Greifer stoffschlüssig mit dem Lebensmittelprodukt verbunden. Dieser Stoffschluss erfolgt vorzugsweise durch Erstarren/Frieren von Wasser oder Feuchtigkeit, die sich zwischen dem Greifer und dem Lebensmittelprodukt befindet, vor und/oder nachdem der Greifer an das Lebensmittelprodukt herangeführt und/oder mit diesem in Kontakt gebracht wurde. Vorzugsweise weist die erfindungsgemäße Aufschneidevorrichtung und/oder der erfindungsgemäße Greifer eine Kühlvorrichtung und/oder eine Heizvorrichtung auf, die das Wasser oder Feuchtigkeit erstarren bzw. wieder an- oder auftauen lassen.

**Figur 2** zeigt eine bevorzugte Ausführungsform des erfindungsgemäßen Greifers. Dieser weist in dem vorliegenden Fall Klauen, Haken und/oder Schneiden 16 auf, die zusätzlich zu dem Stoff- noch einen Form- und/oder Kraftschluss bewirken können. Die Mittel 16 können aber auch lediglich zur Vergrößerung der Kontaktfläche zwischen dem Greifer und dem Lebensmittelprodukt 2 dienen, um den Stoffschluss zu verbessern.

### Bezugszeichenliste:

- 1: Ablagetisch
- 2: Lebensmittelprodukt
- 3: Messeraufnahme
- 4: Auflagefläche, Transportmittel einer Spur 7
- 5: Aufschneidevorrichtung
- 6: Schneidebene
- 7: Spur
- 8: Greifer
- 9: Schneidleiste, Schneidkante
- 10: Produktführung
- 11: Messer, Schneidmesser, Kreismesser, Sichelmesser
- 12: Lebensmittelscheiben
- 13: Rückseite des Lebensmittelproduktes
- 14: Portion, Lebensmittelportion
- 15: Stoffschlüssige Verbindung zwischen Greifer und Produkt
- 16: Stoff-, Form- und/oder Kraftschlüssige Verbindung zwischen dem Greifer und dem Produkt

## Patentansprüche

1. Hochleistungsschneidemaschine (5), die ein Schneidmesser (11), das von einem Ende eines Lebensmittelproduktes (2) Lebensmittelscheiben (12) abtrennt, und einen Greifer (8) aufweist, der reversibel mit dem anderen Ende des Lebensmittelprodukts (2) in Eingriff steht und dieses beim Aufschneiden der letzten Lebensmittelscheiben des Lebensmittelprodukts fixiert und/oder führt, **dadurch gekennzeichnet, dass** Mittel vorgesehen sind, die geeignet sind, eine stoffschlüssige Verbindung des Greifers (8) mit dem Ende (13) des Lebensmittelprodukts (2) zu erzeugen.

2. Hochleistungsschneidemaschine (5)nach Anspruch 1, **dadurch gekennzeichnet, dass** der Stoffschluss durch einen Phasenwechsel eines Verbindungsstoffes, insbesondere Wasser erfolgt.

3. Hochleistungsschneidemaschine (5)nach Anspruch 2, **dadurch gekennzeichnet, dass** der Greifer und/oder das Lebensmittelprodukt kühlbar vorgesehen ist.

4. Hochleistungsschneidemaschine (5) nach Anspruch 3, **dadurch gekennzeichnet, dass** die Kühlung durch ein flüssiges Gas, insbesondere Stickstoff, erfolgt.

5. Hochleistungsschneidemaschine (5)nach Anspruch 2 -4, **dadurch gekennzeichnet**, der Greifer und/oder das Lebensmittelprodukt erwärmbar vorgesehen ist

6. Hochleistungsschneidemaschine (5)nach Anspruch 5, **dadurch gekennzeichnet, dass** die Heizung eine elektrische Heizung ist.

7. Hochleistungsschneidemaschine (5)nach einem der voranstehenden Ansprüche, **dadurch gekennzeichnet, dass** er ein Form- und/oder Kraftschlussmittel (16), vorzugsweise eine Klaue und/oder einen Dorn aufweist.

8. Verfahren zum Aufschneiden eines Lebensmittelprodukts mit einer Hochleistungsschneidemaschine (5), die von einem Ende eines Lebensmittelproduktes (2) Lebensmittelscheiben (12) abtrennt, und einen Greifer (8) aufweist, der reversibel mit dem anderen Ende des Lebensmittelprodukts (2) in Eingriff steht und dieses beim Aufschneiden der letzten Lebensmittelscheiben des Lebensmittelprodukts fixiert, **dadurch gekennzeichnet, dass** zwischen dem Ende (13) und dem Greifer (8) ein Stoffschluss ausgebildet wird.

9. Verfahren nach Anspruch 8, **dadurch gekennzeichnet, dass** das Ende (13) an dem Greifer festgefroren wird.

10. Verfahren nach einem der Ansprüche 8 oder 9, **dadurch gekennzeichnet, dass** Verbindung nach Beendigung des Aufschneidens gelöst, insbesondere durch Auftauen gelöst wird.

## Claims

1. High-performance cutting machine (5) which has a cutting blade (11), which separates food slices (12) from an end of a food product (2), and a gripper (8), which is reversibly engaged with the other end of the food product (2) and fixes and/or guides same during the slicing of the last food slices of the food product, **characterized in that** means are provided which are suitable for producing an integrally bonded connection of the gripper (8) to the end (13) of the food product (2).

2. High-performance cutting machine (5) according to Claim 1, **characterized in that** the material bond is realized by a phase change of a bonding substance, in particular water.

3. High-performance cutting machine (5) according to Claim 2, **characterized in that** the gripper and/or the food product is/are provided so as to be coolable.

4. High-performance cutting machine (5) according to Claim 3, **characterized in that** the cooling is realized by a liquid gas, in particular nitrogen.

5. High-performance cutting machine (5) according to Claims 2-4, **characterized in that** the gripper and/or the food product is/are provided so as to be warmable.

6. High-performance cutting machine (5) according to Claim 5, **characterized in that** the heating facility is an electric heater.

7. High-performance cutting machine (5) according to one of the preceding claims, **characterized in that** it has a positive locking and/or non-positive locking means (16), preferably a claw and/or a spike.

8. Method for slicing a food product by means of a high-performance cutting machine (5) which separates food slices (12) from an end of a food product (2) and which has a gripper (8), which is reversibly engaged with the other end of the food product (2) and fixes same during the slicing of the last food slices of the food product, **characterized in that** a material bond is formed between the end (13) and the gripper (8).

9. Method according to Claim 8, **characterized in that** the end (13) is frozen to the gripper.

10. Method according to one of Claims 8 or 9, **characterized in that** joint, following conclusion of the slicing, is broken, in particular broken by unfreezing.

## Revendications

1. Machine de coupe à haute performance (5), comportant une lame de tranchage (11), séparant des tranches d'aliment (12) d'une extrémité d'un produit alimentaire (2), et un dispositif de préhension (8), en prise de manière réversible sur l'autre extrémité du produit alimentaire (2) et fixe et/ou guide celle-ci lors de la coupe de la dernière tranche d'aliment du produit alimentaire, **caractérisée en ce que** des moyens adaptés pour créer un raccord par liaison de matériel du moyen de préhension (8) avec l'extrémité (13) du produit alimentaire (2) sont prévus.

2. Machine de coupe à haute performance (5) selon la revendication 1, **caractérisée en ce que** la liaison de matériel s'effectue par un changement de phase d'un produit raccordant, en particulier l'eau.

3. Machine de coupe à haute performance (5) selon la revendication 2, **caractérisée en ce que** le moyen de préhension et/ou le produit alimentaire est prévu pour être refroidissable.

4. Machine de coupe à haute performance (5) selon la revendication 3, **caractérisée en ce que** le refroidissement s'effectue par un gaz liquide, en particulier l'azote.

5. Machine de coupe à haute performance (5) selon la revendication 2-4, **caractérisée en ce que** le moyen de préhension et/ou le produit alimentaire est prévu pour être réchauffable.

6. Machine de coupe à haute performance (5) selon la revendication 5, **caractérisée en ce que** le réchauffage est un réchauffage électrique.

7. Machine de coupe à haute performance (5) selon l'une des revendications ci-dessus, **caractérisée en ce qu'**elle comporte un moyen d'engagement de force et/ou de complémentarité de forme (16), de préférence une mâchoire et/ou un mandrin.

8. Procédé de découpe d'un produit alimentaire avec une machine de coupe à haute performance (5), laquelle sépare des tranches d'aliment (12) d'une extrémité d'un produit alimentaire (2), et comporte un dispositif de préhension (8), en prise de manière réversible sur l'autre extrémité du produit alimentaire (2) et fixe celle-ci lors de la coupe de la dernière tranche d'aliment du produit alimentaire, **caractérisée en ce qu'**une liaison de matériel est réalisée entre le moyen de préhension (8) et l'extrémité (13).

9. Procédé selon la revendication 8, **caractérisé en ce que** l'extrémité (13) est collée par le gel sur le moyen de préhension.

10. Procédé selon l'une des revendications 8 ou 9, **caractérisé en ce que** le raccord est dissous lorsque la découpe est terminée, en particulier dissous par dégel.
